# EUROPEAN PATENT APPLICATION

(11) **EP 4 116 896 A1**
(43) Date of publication of application: **11.01.2023**
(21) Application number: 20923260.2
(22) Date of filing: 02.03.2020
(51) Int. Cl.: G06Q 10/04, G06Q 10/08

(54) **INFORMATION PROCESSING DEVICE, PROCESSING PROCEDURE UPDATE METHOD, AND PROCESSING PROCEDURE UPDATE PROGRAM**

(71) Applicant: FUJITSU LIMITED, Kawasaki-shi, Kanagawa 211-8588 (JP)
(72) Inventor: YAMAZAKI, Takashi, Kawasaki-shi, Kanagawa 211-8588 (JP)
(74) Representative: Hoffmann Eitle
(86) International application number: PCT/JP2020/008657
(87) International publication number: WO 2021/176507

(57) **Abstract**

An apparatus configured to: perform a simulation of sequences different from each other by using a condition that, when a procedure group including processing procedures specifying a route and work to be performed at a work point on the route is defined, processing subjects has executed the sequences of processing according to the processing procedures assigned to the processing subjects, and the work point overlaps and time at which the work is performed overlaps between the processing subjects, subjects other than one of the processing subjects that has started the work first stand by until the one of the processing subjects completes the work; extract stand-by information for each of the processing subjects from a result of the performing of the simulation; and update the procedure group by combining the processing procedures of two or more of the processing subjects into one processing procedure according to the extracted stand-by information.

## Description

### TECHNICAL FIELD

The present case relates to an information processing apparatus, a method of updating a processing procedure, and a processing procedure update program.

### BACKGROUND ART

At distribution bases, work such as picking to pick products from product shelves and pack them in boxes is performed according to processing procedures such as slips. Techniques of improving efficiency of picking to shorten the time needed for work such as picking has been disclosed (e.g., see Patent Document 1).

### SUMMARY

### TECHNICAL PROBLEM

In a case where multiple workers perform operations such as picking sequentially, if an operation is performed in front of the moving direction, it is needed to wait on the spot until the operation is complete, thereby causing congestion. In view of the above, it is needed to combine processing procedures assigned to the multiple workers into a processing procedure for one person to carry out multitasking, and to execute the processing procedure with one worker according to the multi-tasked processing procedure. However, an optimization method in consideration of the congestion of workers before the multitasking has not been developed.

In one aspect, it is an object of the present invention to provide an information processing apparatus, a method of updating a processing procedure, and a processing procedure update program capable of updating a processing procedure according to congestion of processing subjects.

### SOLUTION TO PROBLEM

In one embodiment, an information processing apparatus is configured to include: a simulation unit that performs a simulation of a plurality of specified sequences different from each other on the basis of a condition that, in a case where a processing procedure group including a plurality of processing procedures for specifying a moving route and work to be performed at a predetermined work point on the moving route is defined, a plurality of processing subjects has executed the specified sequences of processing according to the processing procedures assigned to the plurality of individual processing subjects, and the work point overlaps and time at which the work is performed overlaps between the plurality of processing subjects, the processing subjects other than one of the processing subjects that has started the work first stand by until the one of the processing subjects completes the work; an extraction unit that extracts stand-by information for each of the plurality of processing subjects from a simulation result of the simulation unit; and an update unit that updates the processing procedure group by combining the processing procedures of equal to or more than two of the processing subjects into one processing procedure according to the stand-by information extracted by the extraction unit.

### ADVANTAGEOUS EFFECTS OF INVENTION

It becomes possible to update a processing procedure according to congestion of workers.

### BRIEF DESCRIPTION OF DRAWINGS

FIGs. 1A and 1B are diagrams exemplifying single picking, and FIG. 1C is a diagram exemplifying multi-picking.
FIG. 2A is a functional block diagram illustrating an overall configuration of an information processing apparatus according to a first embodiment, and FIG. 2B is a block diagram exemplifying a hardware configuration of a slip order storage unit, a work sequence replacement unit, a line simulator, an extraction unit, an update unit, and a sequence determination unit of the information processing apparatus.
FIGs. 3A and 3B are diagrams exemplifying layouts.
FIG. 4 is a diagram exemplifying information included in each slip.
FIG. 5 is a diagram exemplifying a flowchart illustrating a work sequence determination process executed by the information processing apparatus.
FIG. 6 is a diagram exemplifying a flowchart illustrating details of step S3.
FIG. 7A is a flowchart illustrating a process of a standard move cell, and FIG. 7B is a flowchart illustrating a process of a branch cell.
FIG. 8A is a flowchart illustrating a process of a pick cell, and FIG. 8B is a flowchart illustrating a process of a slip cell.
FIG. 9 is a diagram exemplifying a result of a case where a work time of each work sequence is calculated according to simulations of FIGs. 5 to 8(b).

### DESCRIPTION OF EMBODIMENTS

At distribution sites, there have been a lot of attempts to optimize truck allocation plans and delivery routes. On-site logistics for performing box packing and transporting the boxes to trucks in a warehouse according to customer orders is also an important project that needs to improve efficiency in the distribution industry as a whole. On-site work, especially a picking process (process of picking products from product shelves and packing them in boxes according to orders) is mainly manual work, and is one of the areas where it is difficult to achieve optimization.

The current mainstream of picking is single picking (picking rule for performing picking work for each delivery customer in response to daily placing orders). However, from the viewpoint of improving the efficiency of picking, transition to multi-picking (efficiently combining customer orders for different delivery destinations to perform picking work) has been gradually progressing.

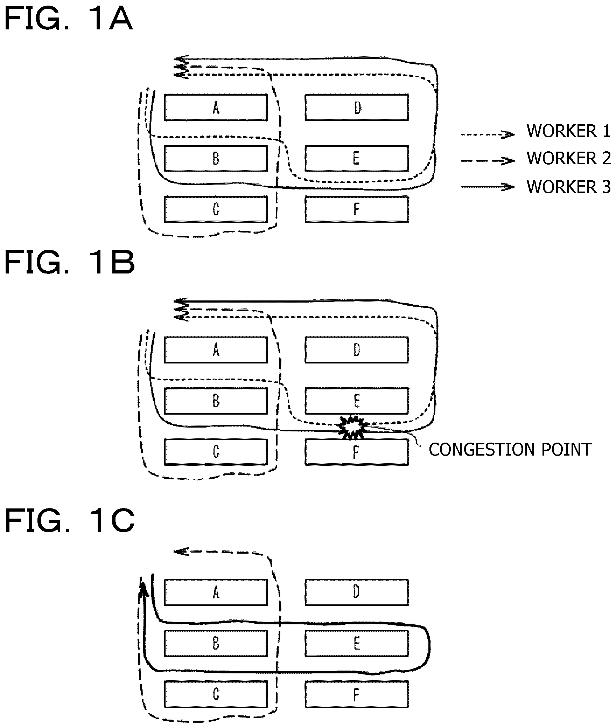

FIG. 1A is a diagram exemplifying work routes of the single picking. As exemplified in FIG. 1A, a plurality of shelves A to F is arranged. Different products are placed on the individual shelves. Each worker moves to the shelf on which the product listed on a slip is placed, and picks the product. The slip in the single picking is issued for each customer. Therefore, each worker picks products for each customer.

Since a plurality of product names is often listed on the slip, the worker moves to the individual shelves on which the individual products listed on the slip are placed. In a case where the shelves on which the individual products are placed are different, the moving routes on which the individual workers move are different. In the example of FIG. 1A, moving routes of workers (1) to (3) are different from each other. For example, the worker (1) moves to the shelf A to pick a product, moves to the shelf E to pick a product thereafter, and returns to the original location. The worker (2) moves to the shelf C to perform picking, and returns to the original location. The worker (3) moves to the shelf B to pick a product, moves to the shelf E to pick a product thereafter, and returns to the original location.

In such single picking, both of the workers (1) and (3) pick products on the shelf E. For example, when the worker (1), the worker (3), and the worker (2) start moving in this order, the worker (3) is not enabled to pick a product on the shelf E until the worker (1) completes picking of a product on the shelf E, whereby the worker (3) is to be stand by in front of the shelf E. Therefore, as exemplified in FIG. 1B, congestion occurs.

In view of the above, as exemplified in FIG. 1C, it is expected to reduce the work loss of the workers by combining the slip of the worker (1) and the slip of the worker (3) into one and performing picking according to the one slip with one worker. For optimization of the multi-picking, it is desirable to maximize the reduction of the work loss. However, an optimization method in consideration of the congestion of workers before the multi-picking has not been developed.

For example, a method using dynamic programming for solving what is called a knapsack problem may be considered. This is a problem of finding a combination that maximizes the total value of items (slips in this case) to be put in a knapsack (worker in this case). When trying to apply this method, it becomes difficult to solve a problem as the scale increases. Furthermore, a formulation of a way of setting the value to be combined differs for each problem, and it is needed to construct a formula that expresses the value each time. Moreover, when actually working according to the multi-tasked slip, the work of the worker may be stagnant due to the combined slip, but it is difficult to solve the problem by the commonly used method of dynamic programming.

In the following embodiment, an information processing apparatus, a method of updating a processing procedure, and a processing procedure update program capable of updating a processing procedure group (slip group) according to congestion of workers will be described.

### [First Embodiment]

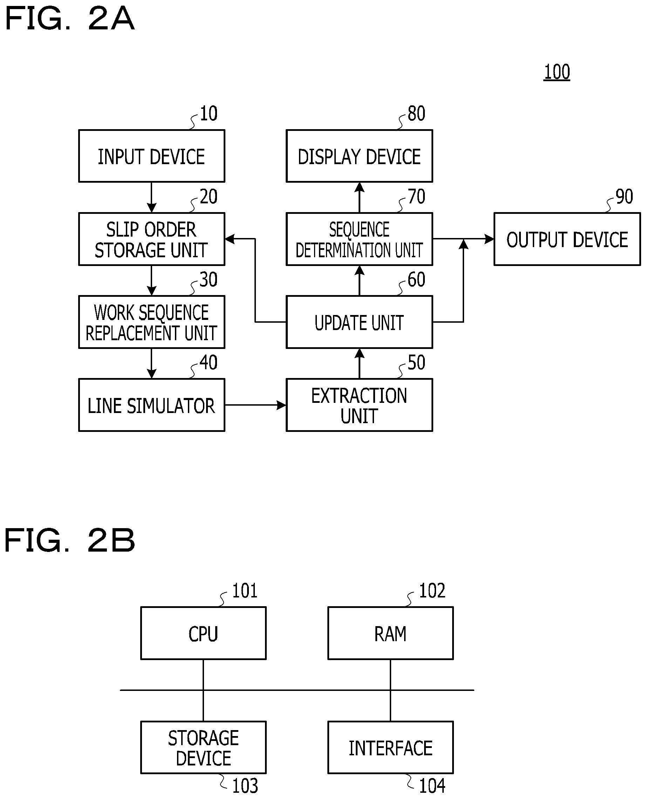

FIG. 2A is a functional block diagram illustrating an overall configuration of an information processing apparatus 100 according to a first embodiment. As exemplified in FIG. 2A, the information processing apparatus 100 includes an input device 10, a slip order storage unit 20, a work sequence replacement unit 30, a line simulator 40, an extraction unit 50, an update unit 60, a sequence determination unit 70, a display device 80, an output device 90, and the like. The input device 10 is an input device such as a keyboard, a mouse, a touch panel, or the like. The display device 80 is a liquid crystal display or the like, which is a device for displaying a result of a work sequence determination process performed by the information processing apparatus 100 and the like. The output device 90 is an output device such as a printer or the like, which outputs a slip updated by the update unit 60 and a work sequence determined by the sequence determination unit 70 by printing or the like.

FIG. 2B is a block diagram exemplifying a hardware configuration of the slip order storage unit 20, the work sequence replacement unit 30, the line simulator 40, the extraction unit 50, the update unit 60, and the sequence determination unit 70 of the information processing apparatus 100. As exemplified in FIG. 2B, the information processing apparatus 100 includes a CPU 101, a RAM 102, a storage device 103, an interface 104, and the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, and the like. The storage device 103 is a non-volatile storage device. For example, a read only memory (ROM), a solid state drive (SSD) such as a flash memory, a hard disk to be driven by a hard disk drive, or the like may be used as the storage device 103. The storage device 103 stores a work sequence determination program. The interface 104 is an interface device between the input device 10, the display device 80, and the like. With the CPU 101 executing the work sequence determination program, the slip order storage unit 20, the work sequence replacement unit 30, the line simulator 40, the extraction unit 50, the update unit 60, and the sequence determination unit 70 are implemented. Note that hardware such as a dedicated circuit may be used as the slip order storage unit 20, the work sequence replacement unit 30, the line simulator 40, the extraction unit 50, the update unit 60, and the sequence determination unit 70.

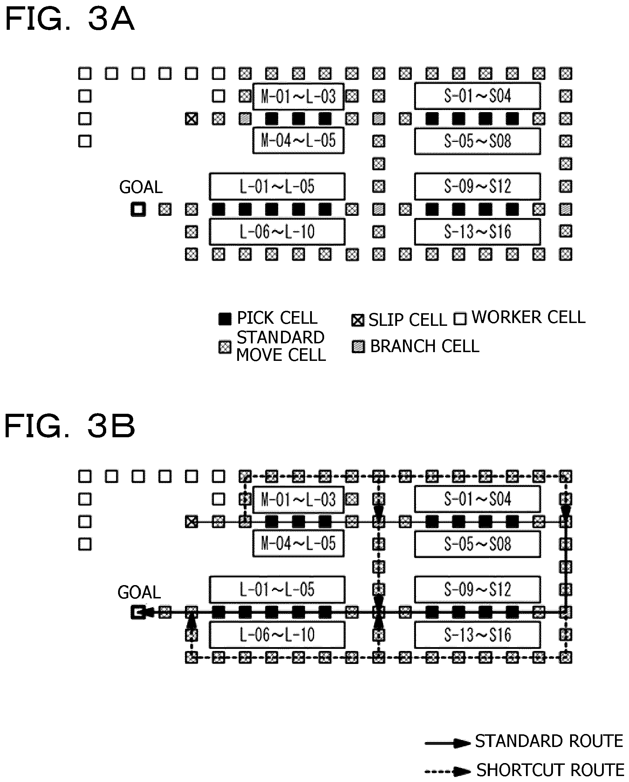

The line simulator 40 stores a layout that models the premises where each worker performs picking. FIG. 3A is a diagram exemplifying the layout stored in the line simulator 40. As illustrated in FIG. 3A, the layout includes multiple cells. The individual cells are arranged at predetermined intervals for each route on which a worker may move. The layout includes standard move cells, branch cells, pick cells, slip cells, and worker cells.

A standard move cell is a cell in which a worker holding a slip moves to an adjacent cell or stands by. A branch cell is a cell in which a worker holding a slip moves to an adjacent cell in any of a plurality of directions or stands by. A pick cell is a cell in which a worker holding a slip performs picking work or moves to an adjacent cell. A slip cell is a point for placing slips for which picking work by a worker has not been performed. A worker cell is a cell in which a worker who has not received a slip moves to an adjacent cell or stands by.

Furthermore, the layout includes multiple shelves on which products are placed. Each of the shelves is arranged to correspond to the position of the pick cell. The example of FIG. 3A includes a pick cell sandwiched between a shelf M-01 and a shelf M-04, a pick cell sandwiched between a shelf M-02 and a shelf M-05, and a pick cell sandwiched between a shelf M-03 and a shelf M-06. Moreover, a pick cell sandwiched between a shelf L-01 and a shelf L-06, a pick cell sandwiched between a shelf L-02 and a shelf L-07, a pick cell sandwiched between a shelf L-03 and a shelf L-08, a pick cell sandwiched between a shelf L-04 and a shelf L-09, and a pick cell sandwiched between a shelf L-05 and a shelf L-10 are included. Moreover, a pick cell sandwiched between a shelf S-01 and a shelf S-05, a pick cell sandwiched between a shelf S-02 and a shelf S-06, a pick cell sandwiched between a shelf S-03 and a shelf S-07, and a pick cell sandwiched between a shelf S-04 and a shelf S-08 are included, and moreover, a pick cell sandwiched between a shelf S-09 and a shelf S-13, a pick cell sandwiched between a shelf S-10 and a shelf S-14, a pick cell sandwiched between a shelf S-11 and a shelf S-15, and a pick cell sandwiched between a shelf S-12 and a shelf S-16 are included.

By applying various limiting conditions to the model of this line simulator, it becomes possible to virtually reproduce the site on the premises and obtain the work completion time and congestion of workers. In the present embodiment, as an example, (1) a slip group (slip order) including multiple slips including a moving route and picking work to be performed in a predetermined pick cell on the moving route is defined. (2) Each worker holds a slip received from a slip cell in a specified work sequence, and starts moving on the moving route of the slip to work at the pick cell of the slip. (3) Each move is allowed to move only to an adjacent cell per unit time. (4) In the pick cell, a standby time is generated by a picking time. (5) In a case where the pick cell overlaps and the picking work time overlaps among a plurality of workers, until the worker who has started the picking work first completes the picking work, other workers are not allowed to move. (6) Workers are not allowed to overtake at a part sandwiched between two shelves. (7) Workers follow a standard route. (8) In a case where there is no product on a destination shelf, overtaking is performed through a shortcut route. (9) In a worker cell, workers move one by one toward the standard move cell next to the slip cell. Note that the layout of FIG. 3B exemplifies a standard route and a shortcut route.

Next, processing procedure update performed by the information processing apparatus 100 will be described. First, a user inputs a slip order using the input device 10. The slip order storage unit 20 stores the slip order input from the input device 10. The slip order includes multiple slips. The slip in this case is a slip indicating contents of single picking work.

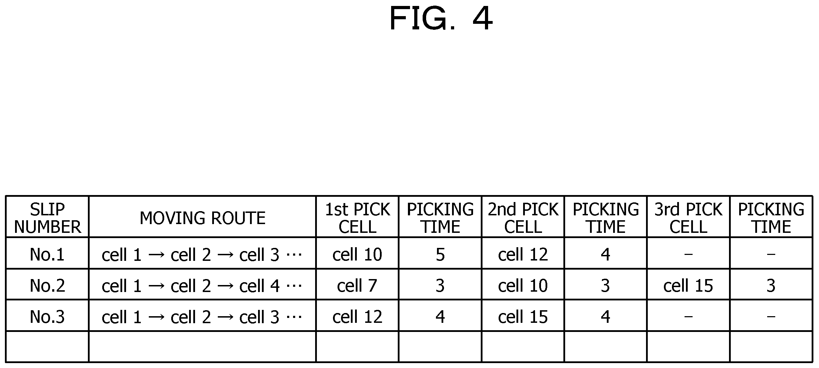

FIG. 4 is a diagram exemplifying information included in each slip. As exemplified in FIG. 4, the slip includes a slip number, a moving route, a pick cell for performing picking work, and a picking time in the pick cell as information. The moving route includes a cell moving sequence. In a case of picking multiple products, multiple pairs of the pick cell and the picking time are included.

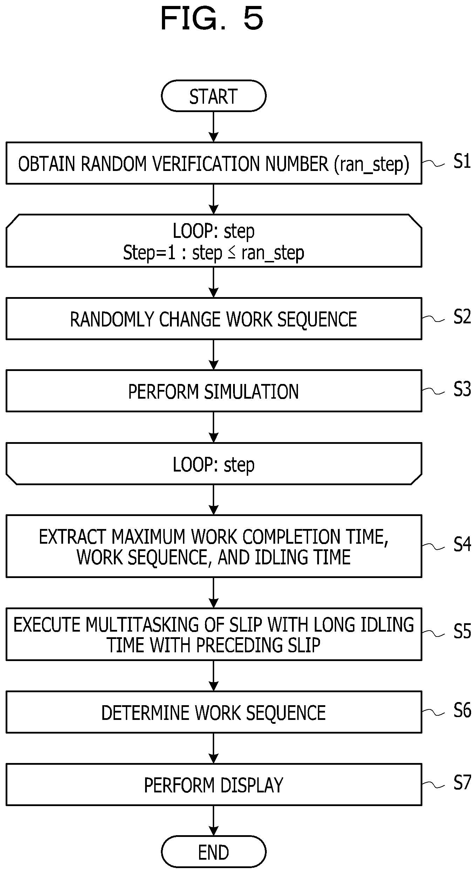

FIG. 5 is a diagram exemplifying a flowchart illustrating a processing procedure update process executed by the information processing apparatus 100. As exemplified in FIG. 5, the work sequence replacement unit 30 obtains a random verification number (ran_step) (step S1). The random verification number (ran_step) is input by, for example, the user or the like using the input device 10.

Next, the work sequence replacement unit 30 randomly changes the work sequence (step S2). The work sequence indicates the order of slips for which each worker performs picking work. In a simulation performed by the line simulator 40, the work sequence indicates the order in which the slips are put into the layout of the line simulator 40.

Next, the line simulator 40 performs a simulation of single picking according to the work sequence determined by the work sequence replacement unit 30 (step S3). The work sequence replacement unit 30 and the line simulator 40 repeat steps S2 and S3 the same number of times as ran_step. As a result, the simulation of single picking is carried out for each work sequence.

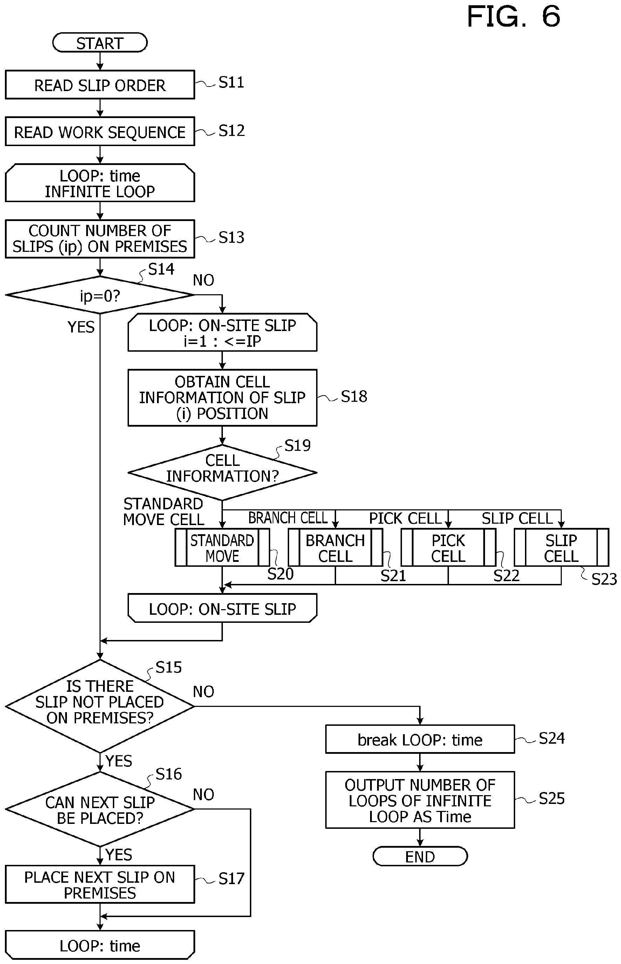

FIG. 6 is a diagram exemplifying a flowchart illustrating details of step S3. As exemplified in FIG. 6, the line simulator 40 reads the slip order from the slip order storage unit 20 (step S11). Next, the line simulator 40 reads the work sequence from the work sequence replacement unit 30 (step S12).

Next, the line simulator 40 counts the number of slips (ip) on the premises (step S13). The number of slips (ip) indicates the number of slips remaining in the cell on the premises. Specifically, it indicates the total number of slips remaining in the slip cells, the standard move cells, the branch cells, and the pick cells. Next, the line simulator 40 determines whether or not the number of slips (ip) is zero (step S14). If no slip has been placed in the cell on the premises, or all the workers have reached the goal, it is determined as "Yes" in step S14. If any of the slips remains in the cell on the premises, it is determined as "No" in step S14.

If it is determined as "Yes" in step S14, the line simulator 40 determines whether or not there is a slip that has not been placed on the premises (step S15). If it is determined as "Yes" in step S15, the line simulator 40 determines whether or not the next slip may be placed (step S16). Specifically, it is determined whether or not a slip remains in the slip cell. If there is no slip in the slip cell, it is determined that the placing is possible. If it is determined as "Yes" in step S16, the line simulator 40 arranges the next slip in the slip cell to place it on the premises (step S17). If it is determined as "No" in step S16, or after execution of step S17, the process is performed again from step S13. With the process of steps S13 to S17 repeated, all slips are placed on the premises according to the work sequence.

If it is determined as "No" in step S14, the line simulator 40 obtains information of the cell in which a slip (i) is located (step S18). A value from 1 to ip is taken by i. In a case where two slips remain in the cell on the premises, ip is 2, and i takes values 1 and 2. One of the values of i is assigned to the slip remaining in the cell on the premises.

Next, the line simulator 40 determines whether or not the cell in which the slip (i) is located is a standard move cell, a branch cell, a pick cell, or a slip cell (step S19).

If it is determined in step S19 that the cell in which the slip (i) is located is a standard move cell, the line simulator 40 executes the process of the standard move cell (step S20). If it is determined in step S19 that the cell in which the slip (i) is located is a branch cell, the line simulator 40 executes the process of the branch cell (step S21). If it is determined in step S19 that the cell in which the slip (i) is located is a pick cell, the line simulator 40 executes the process of the pick cell (step S22). If it is determined in step S19 that the cell in which the slip (i) is located is a slip cell, the line simulator 40 executes the process of the slip cell (step S23).

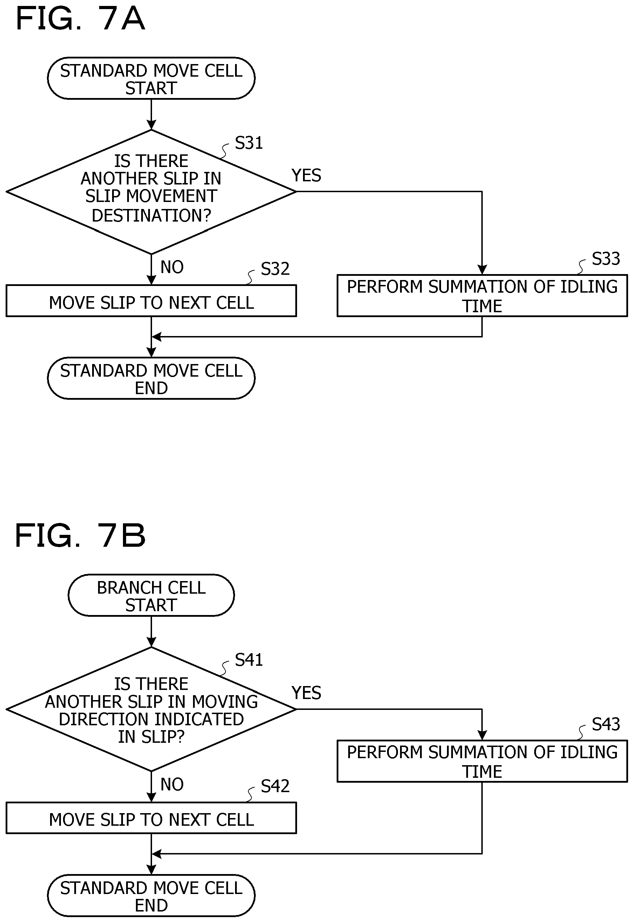

FIG. 7A is a flowchart illustrating the process of the standard move cell. As exemplified in FIG. 7A, the line simulator 40 determines whether or not there is another slip in the movement destination (next cell on the moving route indicated in the slip (i)) (step S31). If it is determined as "No" in step S31, the line simulator 40 moves the slip to the next cell (step S32). If it is determined as "Yes" in step S31, the line simulator 40 performs summation of the idling time of the slip (i) by a unit time (step S33). The idling time indicates a summation time in which the slip (i) is not allowed to move and stands by. Before the summation, the idling time is zero. After execution of step S32 or after execution of step S33, the execution of the flowchart is terminated. With the process of the standard move cell executed, it becomes possible to move the slip (i) when there is no slip in the destination cell, and to cause the slip (i) to stand by when there is a slip in the destination cell.

FIG. 7B is a flowchart illustrating the process of the branch cell. As exemplified in FIG. 7B, the line simulator 40 determines whether or not there is another slip in the next cell on the moving route indicated in the slip (i) in the moving direction (step S41). If it is determined as "No" in step S41, the slip is moved to the next cell (step S42). If it is determined as "Yes" in step S41, the line simulator 40 performs summation of the idling time of the slip (i) by a unit time (step S43). After execution of step S42 or after execution of step S43, the execution of the flowchart is terminated. With the process of the branch cell executed, it becomes possible to move the slip (i) when there is no slip in the destination cell, and to cause the slip (i) to stand by when there is a slip in the destination cell.

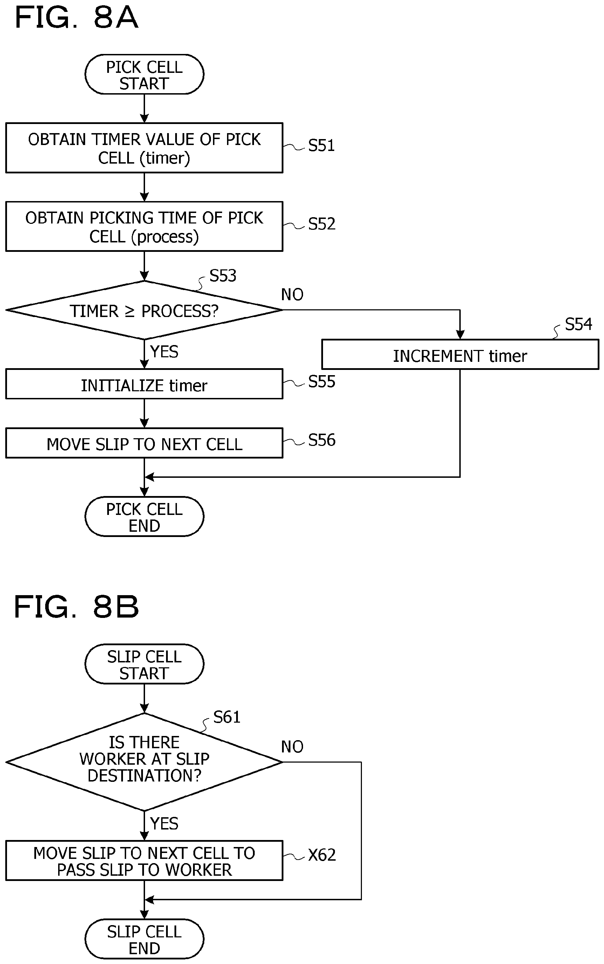

FIG. 8A is a flowchart illustrating the process of the pick cell. As exemplified in FIG. 8A, the line simulator 40 obtains a timer value (timer) of the pick cell (step S51). At the time when the slip (i) has moved to the pick cell, the timer is zero. Next, the line simulator 40 obtains a picking time (process) of the slip (i) in the pick cell (step S52). Next, the line simulator 40 determines whether or not the timer is equal to or greater than the process (step S53). If it is determined as "No" in step S53, the line simulator 40 increments the timer (step S54). If it is determined as "Yes" in step S53, the line simulator 40 initializes the timer of the slip (i) (step S55). Next, the line simulator 40 moves the slip (i) to the next cell as the picking has complete (step S56). After execution of step S54 or step S56, the flowchart is terminated. With the process of the pick cell executed, it becomes possible to place the slip (i) to stand by in the pick cell until the picking time in the pick cell has elapsed. After the picking time in the pick cell has elapsed, the slip (i) is allowed to move to the next cell.

Note that, although it is not determined whether or not there is another slip in the cell adjacent to the pick cell in the flowchart of FIG. 8A, it may be determined. For example, steps S31 to S33 in FIG. 7A may be executed after step S55.

FIG. 8B is a flowchart illustrating the process of the slip cell. As exemplified in FIG. 8B, the line simulator 40 determines whether or not there is a worker at the destination of the slip (worker cell next to the slip cell) (step S61). If it is determined as "Yes" in step S61, the slip is to be passed to the worker, and the slip is moved to the next cell (step S62). If it is determined as "No" in step S61, or after execution of step S62, the flowchart is terminated. With the process of the slip cell executed, it becomes possible to pass the slip to the worker.

The loop from steps S18 to S23 (on-site slip loop) is repeatedly executed until the slip number i changes from 1 to ip. As a result, one of the processes of steps S20 to S23 may proceed for all the slips remaining on the premises.

Thereafter, step S15 is executed. Since the time advances by one unit time each time the loop of steps S14 to S23 (time loop) is performed, with the number of loops of the time loop obtained, it becomes possible to obtain the work completion time needed to complete the single picking work of all the slips.

If it is determined as "No" in step S15, the line simulator 40 breaks (stops) the time loop (step S24). Next, the line simulator 40 calculates and outputs the number of loops of the time loop as Time (step S25). Thereafter, the flowchart of FIG. 6 is terminated. This Time corresponds to the work completion time needed to complete the single picking work of all the slips.

FIG. 5 is referred to again. After the loop of steps S2 and S3 is complete, the extraction unit 50 extracts the work sequence in the case where the work completion time is maximized or exceeds a threshold value and the idling time of each slip in the work sequence (step S4). Next, the update unit 60 combines the slip with the idling time exceeding the threshold value and the immediately preceding slip in the work sequence into one slip, and updates the slips stored in the slip order storage unit 20 (step S5). In this case, the slip with the idling time exceeding the threshold value and the immediately preceding slip are combined into one, and slips that do not correspond to any of them are not particularly updated. The target for combining the slip with the idling time exceeding the threshold value may be other slips including the picking work that has caused congestion in the slip or the like. Furthermore, at the time of combining multiple slips into one, it is sufficient if all of multiple picking operations are included and the moving route is modified to pass through all the pick cells where the picking operations are performed as appropriate.

Next, the sequence determination unit 70 determines the optimum work sequence using a sequential optimization algorithm (step S6). Specifically, the sequence determination unit 70 causes the line simulator 40 to execute the loop of steps S2 and S3 again for the updated slip, and determines, as an optimum work sequence, the work sequence in which the work completion time is less than the threshold value or the work completion time is the shortest. The display device 80 displays the work sequence determined by the sequence determination unit 70, the two slips combined into one, and the like (step S7). Thereafter, the flowchart of FIG. 5 is terminated.

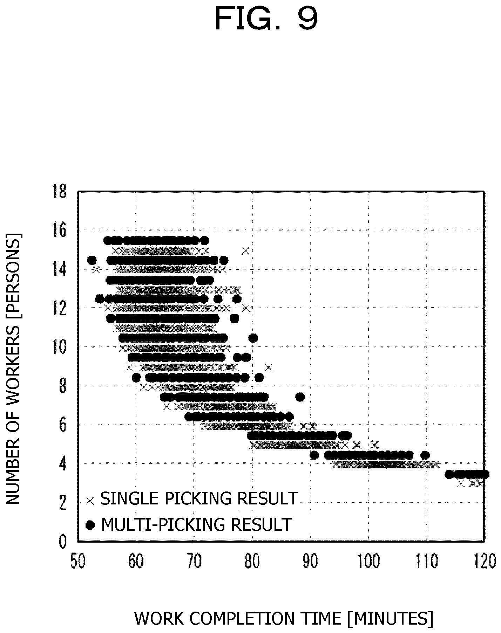

FIG. 9 is a diagram exemplifying a result of a case where the work time of each work sequence is calculated according to the simulations of FIGs. 5 to 8(b). In FIG. 9, the horizontal axis represents a calculated work completion time, and the vertical axis represents the number of workers (number of slips) used in the simulation. In FIG. 9, "×" indicates a result of single picking, and "•" indicates a result of multi-picking. The number of workers is added by 0.5 for a result of multi-picking to facilitate visualization of the result of FIG. 9.

According to the result of FIG. 9, the results of the multi-picking are uniformly better than the results of the single picking. While the multi-picking alone causes congestion of workers and does not necessarily make improvement, the ultimate efficiency is improved when the multi-picking is carried out in anticipation of the effect of reordering according to the present embodiment.

In the present embodiment, the congestion information of the workers is extracted from the simulation result of the line simulator 40, and the slips of two or more workers are combined into one slip according to the extracted congestion information. As a result, it becomes possible to update the processing procedure according to the congestion of the workers. Furthermore, in order to achieve most efficient multitasking, the work sequence is randomly replaced within the range that satisfies the restrictions on the premise (e.g., work delivery deadline and slip types that may be multi-tasked), and the sequence plan with heavy congestion (long congestion) is calculated. This solution completely opposite from the viewpoint of work efficiency improvement is purposefully used to obtain a plan that causes congestion purposefully, and the multitasking of the slips is carried out. Moreover, the same line simulator is used to further obtain the work sequence of the individual slips combined for the multi-picking in which the work completion time becomes smaller, whereby optimization of the multi-picking work sequence is carried out with the same engine.

Note that, in the example described above, the line simulator 40 functions as an exemplary simulation unit that performs a simulation of a plurality of specified sequences different from each other on the basis of a condition that, in a case where a processing procedure group including a plurality of processing procedures for specifying a moving route and work to be performed at a predetermined work point on the moving route is defined, a plurality of processing subjects has executed the specified sequences of processing according to the processing procedures assigned to the plurality of individual processing subjects, and the work point overlaps and time at which the work is performed overlaps between the plurality of processing subjects, the processing subjects other than one of the processing subjects that has started the work first stand by until the one of the processing subjects completes the work. The slip is an example of the processing procedure. The work sequence is an example of the specified sequence. The worker is an example of the processing subject. The extraction unit 50 functions as an exemplary extraction unit that extracts stand-by information regarding each of the plurality of processing subjects from a simulation result of the simulation unit. The update unit 60 functions as an exemplary update unit that updates the processing procedure group by combining the processing procedures of two or more processing subjects into one processing procedure according to the stand-by information extracted by the extraction unit. The sequence determination unit 70 functions as an exemplary sequence determination unit that determines a processing procedure sequence according to the next simulation result performed by the simulation unit according to the processing procedure group updated by the update unit.

While the embodiment of the present invention has been described above in detail, the present invention is not limited to such a specific embodiment, and various modifications and alterations may be made within the scope of the gist of the present invention described in the claims.

### CITATION LIST

### PATENT DOCUMENT

Patent Document 1: Japanese Laid-open Patent Publication No. 2004-1933

### REFERENCE SIGNS LIST

10Input device
20Slip order storage unit
30Work sequence replacement unit
40Line simulator
50Extraction unit
60Update unit
70Sequence determination unit
80Display device
90Output device
100Information processing apparatus

## Claims

1. An information processing apparatus comprising:
a simulation unit that performs a simulation of a plurality of specified sequences different from each other on a basis of a condition that, in a case where a processing procedure group that includes a plurality of processing procedures that specifies a moving route and work to be performed at a predetermined work point on the moving route is defined, a plurality of processing subjects has executed the specified sequences of processing according to the processing procedures assigned to the plurality of individual processing subjects, and the work point overlaps and time at which the work is performed overlaps between the plurality of processing subjects, the processing subjects other than one of the processing subjects that has started the work first stand by until the one of the processing subjects completes the work;
an extraction unit that extracts stand-by information for each of the plurality of processing subjects from a simulation result of the simulation unit; and
an update unit that updates the processing procedure group by combining the processing procedures of equal to or more than two of the processing subjects into one processing procedure according to the stand-by information extracted by the extraction unit.

2. The information processing apparatus according to claim 1, further comprising:
a sequence determination unit that determines a processing procedure sequence according to a next simulation result performed by the simulation unit according to the processing procedure group updated by the update unit.

3. The information processing apparatus according to claim 1 or 2, wherein
the extraction unit extracts the stand-by information in the specified sequence in a case where a work completion time needed to complete the work of all the processing procedures is the longest or in the specified sequence in a case where the work completion time exceeds a threshold value.

4. The information processing apparatus according to any one of claims 1 to 3, wherein
the update unit combines the processing procedure of the processing subject in which a stand-by time exceeds a threshold value and the processing procedure of another processing subject into one processing procedure.

5. The information processing apparatus according to any one of claims 1 to 4, wherein
the simulation unit is a line simulator that reproduces movement of the processing subject on a layout under the condition.

6. A computer implemented method of updating processing procedure, the method comprising:
performing a simulation of a plurality of specified sequences different from each other on a basis of a condition that, in a case where a processing procedure group that includes a plurality of processing procedures that specifies a moving route and work to be performed at a predetermined work point on the moving route is defined, a plurality of processing subjects has executed the specified sequences of processing according to the processing procedures assigned to the plurality of individual processing subjects, and the work point overlaps and time at which the work is performed overlaps between the plurality of processing subjects, the processing subjects other than one of the processing subjects that has started the work first stand by until the one of the processing subjects completes the work;
extracting stand-by information for each of the plurality of processing subjects from a simulation result of the performing of the simulation; and
updating the processing procedure group by combining the processing procedures of equal to or more than two of the processing subjects into one processing procedure according to the stand-by information extracted by the extracting.

7. The computer implemented method according to claim 6, further comprising:
determining a processing procedure sequence according to a next simulation result obtained by the performing of the simulation according to the processing procedure group updated by the updating.

8. The computer implemented method according to claim 6 or 7, wherein
the extracting is configured to extract the stand-by information in the specified sequence in a case where a work completion time needed to complete the work of all the processing procedures is the longest or in the specified sequence in a case where the work completion time exceeds a threshold value.

9. The computer implemented method according to any one of claims 6 to 8, wherein
the updating is configured to combine the processing procedure of the processing subject in which a stand-by time exceeds a threshold value and the processing procedure of another processing subject into one processing procedure.

10. The computer implemented method according to any one of claims 6 to 9, wherein
the performing of the simulation is configured to perform a line simulator that reproduces movement of the processing subject on a layout under the condition.

11. A processing procedure update program comprising instructions which, when executed by a computer, cause the computer to perform updating processing, the updating processing comprising:
performing a simulation of a plurality of specified sequences different from each other on a basis of a condition that, in a case where a processing procedure group that includes a plurality of processing procedures that specifies a moving route and work to be performed at a predetermined work point on the moving route is defined, a plurality of processing subjects has executed the specified sequences of processing according to the processing procedures assigned to the plurality of individual processing subjects, and the work point overlaps and time at which the work is performed overlaps between the plurality of processing subjects, the processing subjects other than one of the processing subjects that has started the work first stand by until the one of the processing subjects completes the work;
extracting stand-by information for each of the plurality of processing subjects from a simulation result of the performing of the simulation; and
updating the processing procedure group by combining the processing procedures of equal to or more than two of the processing subjects into one processing procedure according to the stand-by information extracted by the extracting.

12. The processing procedure update program according to claim 11, further comprising:
determining a processing procedure sequence according to a next simulation result obtained by the performing of the simulation according to the processing procedure group updated by the updating.

13. The processing procedure update program according to claim 11 or 12, wherein
the extracting is configured to extract the stand-by information in the specified sequence in a case where a work completion time needed to complete the work of all the processing procedures is the longest or in the specified sequence in a case where the work completion time exceeds a threshold value.

14. The processing procedure update program according to any one of claims 11 to 13, wherein
the updating is configured to combine the processing procedure of the processing subject in which a stand-by time exceeds a threshold value and the processing procedure of another processing subject into one processing procedure.

15. The processing procedure update program according to any one of claims 11 to 14, wherein
the performing of the simulation is configured to perform a line simulator that reproduces movement of the processing subject on a layout under the condition.
